# EUROPÄISCHE PATENTSCHRIFT

(11) **EP 2 599 677 B1**
(45) Veröffentlichungstag und Bekanntmachung des Hinweises auf die Patenterteilung: **29.03.2017**
(21) Anmeldenummer: 12191187.9
(22) Anmeldetag: 05.11.2012
(51) Int. Cl.: B60T 8/1755, B62D 15/02

(54) **Verfahren und Vorrichtung zum Bestimmen eines Fahrparameters und Verfahren und Vorrichtung zum Steuern eines Antriebsstrangs eines Fahrzeugs**
Method and device for determining a driving parameter and method and device for controlling a drive train of a vehicle
Procédé et dispositif de détermination d'un paramètre de conduite et procédé et dispositif de commande d'une chaîne de transmission d'un véhicule

(30) Priorität: 02.12.2011 DE 102011087670
(43) Veröffentlichungstag der Anmeldung: 05.06.2013
(73) Patentinhaber: ZF Friedrichshafen AG, 88046 Friedrichshafen (DE)
(72) Erfinder: Nusser, Stefan Michael, 88074 Meckenbeuren (DE)

(56) Entgegenhaltungen:
- EP-A1- 0 809 167
- EP-A2- 0 384 384
- DE-A1-102006 046 834
- US-A1- 2008 215 223

## Beschreibung

Die vorliegende Erfindung bezieht sich auf ein Verfahren und eine Vorrichtung zum Bestimmen eines Fahrparameters eines Fahrzeugs sowie auf ein Verfahren und eine Vorrichtung zum Steuern eines Antriebsstrangs, beispielsweise einer Sperre eines Fahrzeugs.

Eine Sperrkupplung in einem Achsdifferenzial eines Fahrzeugs kann selbsttätig aktiviert werden, wenn Schlupf an einem angetriebenen Rad gemessen wird. Zum korrekten Steuern einer solchen Differenzialsperre ist der Schlupf genau zu ermitteln.

Die DE 10 2004 004 870 A1 beschreibt ein Verfahren zur Steuerung einer Kraftfahrzeug-Drehmomentübertragungskupplung. Dabei werden aktuelle Werte des Lenkwinkels des Fahrzeugs sowie der Fahrzeuggeschwindigkeit berücksichtigt. Der Lenkwinkel wird von einem Drehwinkelsensor geliefert, welcher die Drehstellung eines Lenkrads des Fahrzeugs erfasst.

Die EP 0 809 167 offenbart ein Verfahren zum Bereitstellen eines Lenkungsstellungssignals zur Verwendung in einem Kraftfahrzeug, welches das Lenkungsstellungssignal in Ansprechen auf einen Fahrzeuglenkstellungssensor aufrechterhält, wobei das Lenkstellungssignal in Ansprechen auf eine Winkeldrehung eines Fahrzeuglenkrades in einer ersten Richtung zunimmt und in Ansprechen auf eine Winkeldrehung des Fahrzeuglenkrades in einer zweiten Richtung, die entgegengesetzt zur ersten Richtung ist, abnimmt. Das Verfahren gemäß der EP 0 809 167 umfasst weiterhin die Schritte, dass eine abgeschätzte Lenkstellung in Ansprechen auf eine Fahrzeuggierrate bestimmt wird und dass das Lenkstellungssignal in Ansprechen auf die abgeschätzte Lenkstellung adaptiv eingestellt wird, wobei Stellungsfehler des Lenkstellungssignals korrigiert werden.

Vor diesem Hintergrund schafft die vorliegende Erfindung ein verbessertes Verfahren und eine verbesserte Vorrichtung zum Bestimmen eines Fahrparameters eines Fahrzeugs sowie ein verbessertes Verfahren und eine verbesserte Vorrichtung zum Steuern eines Antriebsstrangs eines Fahrzeugs gemäß den Hauptansprüchen. Vorteilhafte Ausgestaltungen ergeben sich aus den Unteransprüchen und der nachfolgenden Beschreibung.

Die Rotationsgeschwindigkeit eines Fahrzeugs, insbesondere die Drehrate des Fahrzeugs um seine Hochachse kann eingesetzt werden, um unterschiedliche Fahrparameter des Fahrzeugs zu bestimmen. Beispielsweise kann der Lenkwinkel des Fahrzeugs basierend auf der Drehrate bestimmt werden. Ebenso kann basierend auf der Drehrate eine Differenzgeschwindigkeit zweier Räder einer Achse des Fahrzeugs bestimmt werden. Aus dem Lenkwinkel und der Differenzgeschwindigkeit lässt sich wiederum eine Aussage über den Schlupf eines Rades des Fahrzeugs treffen. Eine Information über den Schlupf kann zur Steuerung des Antriebsstrangs, beispielsweise zum Aktivieren einer Differenzialsperre des Fahrzeugs, eingesetzt werden.

Mit einer geeigneten Vorrichtung, beispielsweise einem Automatic Drivetrain Management (ADM), können Schaltfunktionen im Antriebsstrang von Fahrzeugen mit und ohne Allradantrieb gesteuert werden. Mittels einer solchen Vorrichtung kann erkannt werden, ob an einem Rad des Fahrzeugs Schlupf vorhanden ist. Wird an einem Rad Schlupf erkannt, können von der Vorrichtung dem Rad zugeordnete Sperren, beispielsweise Achssperren und Längssperren, zugeschaltet werden, um eine verbesserte Traktion zu erreichen. Werden die für die Steuerung der Schaltfunktionen im Antriebsstrang erforderlichen Fahrparameter über die Drehrate des Fahrzeugs bestimmt, so kann beispielsweise auf einen im Fahrzeug verbauten Lenkwinkelsensor verzichtet werden.

Gemäß einer Ausführungsform kann durch den Einsatz eines Gierratensensors ein Lenkwinkelsensor ersetzt werden. Der Gierratensensor kann in Kombination mit einer geeigneten Elektronik die Funktion des Lenkwinkelsensors mit übernehmen und eine eindeutige Schlupferkennung durchführen. Durch die Einsparung des Lenkwinkelsensors können Lenkwinkelsensor-Einstellungsarbeiten und notwendige Konfigurationsmessungen wegfallen. Vorteilhafterweise gibt der Gierratensensor im Gegensatz zum Lenkwinkelsensor Auskunft über den realen Fahrzeugzustand und kann damit bessere Eigenschaften bei höheren Kurvenbeschleunigungen liefern. Auch kann über den Gierratensensor eine Software-Funktion in Bezug auf eine Zuschaltlogik für Steigung bzw. Neigung implementiert werden.

Ein Verfahren zum Bestimmen eines möglichst exakten Wertes für den tatsächlichen Lenkwinkel eines Fahrzeugs, bei welchem ein erster Lenkwinkel des Fahrzeugs basierend auf einer Drehrate des Fahrzeugs bestimmt wird, wobei diese Drehrate mittels eines Dreh- oder Gierratensensors des Fahrzeugs bestimmt wird, ist dadurch gekennzeichnet, dass ein zweiter Lenkwinkel basierend auf Raddrehzahlen zumindest zweier gegenüberliegender Räder des Fahrzeugs bestimmt wird, wobei diese Raddrehzahlen für jedes dieser Räder mittels eines Raddrehzahlsensors bestimmt werden, und dass der möglichst exakte Wert für den tatsächlichen Lenkwinkel durch einen Vergleich oder eine Kombination der Werte des ersten und zweiten Lenkwinkels bestimmt wird..

Bei dem Fahrzeug kann es sich um ein Kraftfahrzeug, beispielsweise um einen Personenkraftwagen, oder um ein Nutzfahrzeug handeln. Das Fahrzeug kann mit oder ohne Allradantrieb ausgeführt sein. Es können also eine oder mehrere Achsen des Fahrzeugs angetrieben sein. Der erste Lenkwinkel kann gemäß einer vorgegebenen Bestimmungsvorschrift unter Berücksichtigung der Fahrzeuggeometrie aus der Drehrate des Fahrzeugs bestimmt werden. Dazu erforderliche Bestimmungs-schritte können von einer geeigneten Einrichtung, beispielsweise einer Logikeinrichtung oder Recheneinrichtung, durchgeführt werden. Gemäß dieser Ausführungsform ist kein eigener Lenkwinkelsensor oder Lenkradwinkelsensor zur Bestimmung des ersten Lenkwinkels, beispielsweise über eine direkte Messung eines Lenkradeinschlags, erforderlich.

Der Lenkwinkel kann beispielsweise durch eine Lenkradbewegung eines Lenkrads des Fahrzeugs eingestellt werden. Durch den Lenkwinkel wird eine Richtungsänderung des Fahrzeugs veranlasst. Dabei werden lenkbare Räder einer lenkbaren Achse des Fahrzeugs, beispielsweise die Räder der Vorderachse des Fahrzeugs, entsprechend des Lenkwinkels eingeschlagen. Es können auch mehrere lenkbare Achsen an dem Fahrzeug vorgesehen sein, sodass Räder mehrerer Achsen entsprechend dem Lenkwinkel eingeschlagen werden. Der Lenkwinkel kann in Bezug zu der Längsachse des Fahrzeugs angegeben sein. Die Radlenkwinkel der Räder einer lenkbaren Achse des Fahrzeugs, also die Drehung der Räder um deren Hochachse, können sich unterscheiden. In diesem Fall kann der Lenkwinkel einem Mittelwert aus den Radlenkwinkeln der lenkbaren Räder entsprechen.

Unter der Drehrate kann die Drehgeschwindigkeit des Fahrzeugs um die Hochachse des Fahrzeugs verstanden werden. Die Drehrate kann auch als Gierrate bezeichnet werden. Die Drehrate kann mittels eines Drehratensensors oder eines Gierratensensors des Fahrzeugs bestimmt werden. Ein Wert oder Werte der Drehrate können über eine Schnittstelle empfangen werden.

Der erste Lenkwinkel kann ferner basierend auf zumindest einer Linearbeschleunigung des Fahrzeugs bestimmt werden. Die zumindest eine Linearbeschleunigung kann zeitgleich mit der Drehrate bestimmt werden oder bestimmt worden sein. Mittels der Drehrate und der zumindest einen Linearbeschleunigung kann die Bewegung des Fahrzeugs relativ zum Untergrund bestimmt werden. Die zumindest eine Linearbeschleunigung kann mittels eines Beschleunigungssensors des Fahrzeugs bestimmt werden. Ein Wert oder Werte der zumindest einen Linearbeschleunigung können über eine Schnittstelle empfangen werden. Die zumindest eine Linearbeschleunigung kann eine Längsbeschleunigung und zusätzlich oder alternativ eine Querbeschleunigung des Fahrzeugs umfassen.

Basierend auf der Drehrate können Drehzahlen zumindest zweier gegenüberliegender Räder des Fahrzeugs bestimmt werden. Basierend auf den Drehzahlen kann zumindest eine Differenzdrehzahl bestimmt werden. Basierend auf der Differenzdrehzahl kann der erste Lenkwinkel bestimmt werden. Zusätzlich zur Drehrate kann die zumindest eine Linearbeschleunigung zur Bestimmung der Drehzahlen verwendet werden. Unter gegenüberliegenden Rädern können Räder an beiden Enden einer Achse des Fahrzeugs verstanden werden. Es können auch die Drehzahlen von Rädern mehrerer Achsen basierend auf der Drehrate bestimmt werden. Insbesondere können die Drehzahlen von mit dem Antriebsstrang verbundener Räder bestimmt werden. Unter der Drehzahl kann eine Drehgeschwindigkeit eines Rads bestimmt werden. In die Bestimmung einer Drehzahl eines Rades kann ein Umfang des Rades mit einfließen. Für jede Achse des Fahrzeugs kann eine Differenzdrehzahl bestimmt werden. Dabei kann es sich um eine Differenz aus den Drehzahlen der Räder der jeweiligen Achse handeln. Der Lenkwinkel kann aus der Differenzdrehzahl unter Kenntnis der Fahrzeuggeometrie, insbesondere der Achsgeometrie, des Fahrzeugs bestimmt werden.

Basierend auf dem ersten Lenkwinkel und der Differenzdrehzahl kann ein Schlupf zumindest eines der zwei gegenüberliegenden Räder des Fahrzeugs bestimmt werden. Jedem Lenkwinkel kann eine Differenzdrehzahl zugeordnet sein, die sich aus der Fahrzeuggeometrie ergeben kann. Weicht eine aktuell bestimmte Differenzdrehzahl von einer aufgrund eines aktuell bestimmten Lenkwinkels erwarteten Differenzdrehzahl ab, so kann dies auf einen unerwünschten Schlupf eines der zwei gegenüberliegenden Räder des Fahrzeugs hindeuten. Durch einen Vergleich der Drehzahlen der beiden Räder kann wiederum darauf geschlossen werden, bei welchem der beiden Räder Schlupf vorliegt. Auf diese Weise kann für jedes angetriebene Rad des Fahrzeugs überprüft werden, ob Schlupf vorliegt.

Basierend auf den Raddrehzahlen kann zumindest eine Differenzraddrehzahl bestimmt werden. Basierend auf der Differenzraddrehzahl kann der zweite Lenkwinkel bestimmt werden. Für jede Achse des Fahrzeugs kann eine Differenzraddrehzahl bestimmt werden. Dabei kann es sich um eine Differenz aus den Raddrehzahlen der Räder der jeweiligen Achse handeln. Dieses Vorgehen kann der Bestimmung des ersten Lenkwinkels aus der über die Gierrate bestimmten Differenzdrehzahl entsprechen.

Somit können basierend auf der Drehrate der erste Lenkwinkel und eine erste Differenzdrehzahl und basierend auf den Raddrehzahlen der zumindest zweigegenüberliegenden Räder der zweite Lenkwinkel und eine zweite Differenzdrehzahl bestimmt werden. Der möglichst exakte Wert für den tatsächlichen Lenkwinkel des Fahrzeugs kann unter Verwendung des ersten Lenkwinkels und des zweiten Lenkwinkels bestimmt werden. Eine Differenzdrehzahl des Fahrzeugs kann basierend auf der ersten Differenzdrehzahl und der zweiten Differenzdrehzahl bestimmt werden. Auf diese Weise können für eine Steuerung des Antriebsstrangs des Fahrzeugs erforderliche Parameter mit hoher Genauigkeit und Sicherheit bestimmt werden.

Beispielsweise kann der möglichst exakte Wert für den tatsächlichen Lenkwinkel des Fahrzeugs basierend auf einem Vergleich des ersten Lenkwinkels und des zweiten Lenkwinkels bestimmt werden. Die Differenzdrehzahl des Fahrzeugs kann basierend auf einem Vergleich der ersten Differenzdrehzahl und der zweiten Differenzdrehzahl bestimmt werden. Ergibt ein jeweiliger Vergleich, dass die verglichenen Werte innerhalb einer Toleranz, beispielsweise innerhalb eines vorgegebenen Wertebereichs, liegen, so können die verglichenen Werte zur Bestimmung des möglichst exakten Werts für den tatsächlichen Lenkwinkel bzw. der Differenzdrehzahl miteinander kombiniert werden, beispielsweise kann ein Mittelwert aus den verglichenen Werten bestimmt werden. Ergibt ein jeweiliger Vergleich, dass die verglichenen Werte außerhalb einer Toleranz liegen, so können die verglichenen Werte jeweils für sich zusätzlich mit separaten Toleranzen verglichen werden. Derjenige der verglichenen Werte, der eine größere Plausibilität aufweist, kann anschließend alleine zur Bestimmung des Lenkwinkels bzw. der Differenzdrehzahl verwendet werden.

Ein Verfahren zum Steuern eines Antriebsstrangs eines Fahrzeugs ist dadurch gekennzeichnet, dass ein möglichst exakter Wert für den tatsächlichen Lenkwinkel des Fahrzeugs gemäß einer beschriebenen Ausführungsform bestimmt wird. Basierend auf diesem Lenkwinkel und einer Differenzdrehzahl des Fahrzeugs wird ein Steuersignal zum Steuern des Antriebs-strangs bestimmt. Insbesondere kann eine Allradfunktion und zusätzlich oder alternativ eine Differenzialsperre des Fahrzeugs basierend auf dem Lenkwinkel und der Differenzdrehzahl gesteuert werden. Das Steuersignal kann über eine Schnittstelle ausgegeben werden. Das Steuersignal kann zur Betätigung eines Aktuators oder Schalters geeignet sein. Auf diese Weise kann der Antriebsstrang auch dann sicher gesteuert werden, wenn kein Signal eines Lenkwinkelsensors zur Verfügung steht oder kein Lenkwinkelsensor vorhanden ist.

Eine Vorrichtung zum Bestimmen eines Fahrparameters eines Fahrzeugs ist dadurch gekennzeichnet, dass die Vorrichtung ausgebildet ist, um einen möglichst exakten Wert für den tatsächlichen Lenkwinkel des Fahrzeugs basierend auf einer mittels eines Dreh- oder Gierratensensors des Fahrzeugs bestimmten Drehrate des Fahrzeugs und basierend auf jeweils mittels eines Raddrehzahlsensors ermittelter Raddrehzahlen zumindest zweier gegenüberliegender Räder des Fahrzeugs zu bestimmen.. Die Vorrichtung kann Einrichtungen umfassen, die ausgebildet sind, um Schritte eines Verfahrens zum Bestimmen eines Fahrparameters eines Fahrzeugs auszuführen.

Eine Vorrichtung zum Steuern eines Antriebsstrangs eines Fahrzeugs ist dadurch gekennzeichnet, dass eine beschriebene Vorrichtung, und eine Einrichtung zum Steuern vorgesehen ist, die ausgebildet ist, um basierend auf einem mit der Vorrichtung bestimmten möglichst exakten Wert für den tatsächlichen Lenkwinkel des Fahrzeugs und einer Differenzdrehzahl des Fahrzeugs ein Steuersignal zum Steuern des Antriebsstrangs zu bestimmen.

Eine Vorrichtung kann ein elektrisches Gerät sein, das Sensorsignale verarbeitet und in Abhängigkeit davon Steuersignale ausgibt. Die Vorrichtung kann eine oder mehrere geeignete Schnittstelle aufweisen, die hard- und/ oder softwaremäßig ausgebildet sein können. Bei einer hardwaremäßigen Ausbildung können die Schnittstellen beispielsweise Teil einer integrierten Schaltung sein, in der Funktionen der Vorrichtung umgesetzt sind. Die Schnittstellen können auch eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Die Erfindung wird anhand der beigefügten Zeichnungen beispielhaft näher erläutert. Es zeigen:
Fig. 1 eine schematische Darstellung eines Fahrzeugs gemäß einem Ausführungsbeispiel der vorliegenden Erfindung;
Fig. 2 eine schematische Darstellung eines Systems gemäß einem Ausführungsbeispiel der vorliegenden Erfindung;
Fig. 3 eine schematische Darstellung eines Fahrzeugs gemäß einem Ausführungsbeispiel der vorliegenden Erfindung;
Fig. 4 eine Ablauflogik gemäß einem Ausführungsbeispiel der vorliegenden Erfindung;
Fig. 5 eine Ablauflogik gemäß einem Ausführungsbeispiel der vorliegenden Erfindung;
Fig. 6 ein Ablaufdiagramm eines Verfahrens zum Bestimmen eines Lenkwinkels gemäß einem Ausführungsbeispiel der vorliegenden Erfindung;
Fig. 7 ein Ablaufdiagramm eines weiteren Verfahrens zum Bestimmen eines Lenkwinkels gemäß einem Ausführungsbeispiel der vorliegenden Erfindung;
Fig. 8 ein Ablaufdiagramm eines weiteren Verfahrens zum Bestimmen eines Lenkwinkels gemäß einem Ausführungsbeispiel der vorliegenden Erfindung;
Fig. 9 ein Ablaufdiagramm eines Verfahrens zum Bestimmen eines Steuersignals gemäß einem Ausführungsbeispiel der vorliegenden Erfindung; und
Fig. 10 ein Ablaufdiagramm eines Verfahrens zum Steuern eines Antriebsstrangs eines Fahrzeugs gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

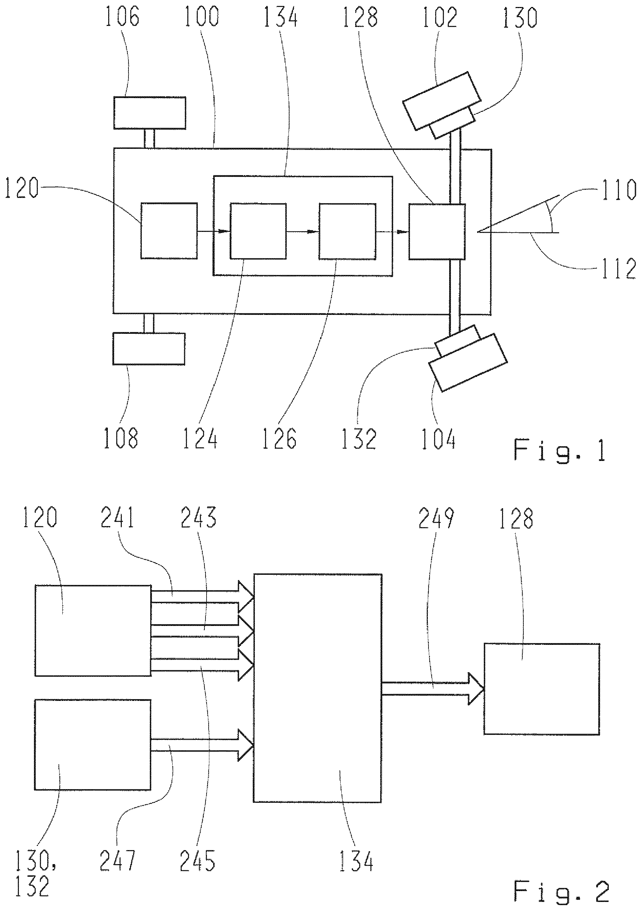

Fig. 1 zeigt eine schematische Darstellung eines Fahrzeugs 100 gemäß einem Ausführungsbeispiel der vorliegenden Erfindung. Das Fahrzeug weist zwei gegenüberliegende Vorderräder 102, 104 und zwei gegenüberliegende Hinterräder 106, 108 auf. Die Vorderräder 102, 104 sind lenkbar und gemäß diesem Ausführungsbeispiel eingeschlagen. Durch die eingeschlagenen Vorderräder 102, 104 wird ein Lenkwinkel 110 des Fahrzeugs 100 gegenüber einer Längsachse 112 des Fahrzeugs bestimmt.

Das Fahrzeug 100 weist einen Sensor 120 in Form eines Gierratensensors auf. Der Sensor 120 ist ausgebildet, um eine Drehung des Fahrzeugs 100 um eine Hochachse des Fahrzeugs 100, also ein Gieren des Fahrzeugs 100 zu erfassen. Der Sensor 100 ist ausgebildet, um ein eine Drehrate des Fahrzeugs 100 um die Hochachse repräsentierendes Signal an einer Schnittstelle auszugeben.

Das Fahrzeug 100 weist eine Vorrichtung 124 zum Bestimmen eines Fahrparameters des Fahrzeugs 100 auf. Die Vorrichtung 124 ist ausgebildet, um die von dem Sensor 120 erfasste Drehrate von dem Sensor 120 über eine Schnittstelle zu empfangen. Gemäß diesem Ausführungsbeispiel ist die Vorrichtung 124 ausgebildet, um den Lenkwinkel 110 basierend auf der Drehrate zu bestimmen. Dazu ist die Vorrichtung 124 zunächst ausgebildet, um basierend auf der Drehrate Drehzahlen der Räder 102, 104 zu bestimmen. Die Vorrichtung 124 ist ferner ausgebildet, um basierend auf den Drehzahlen der Räder 102, 104 eine Differenzdrehzahl bezüglich der Drehzahlen der Räder 102, 104 zu bestimmen. Basierend auf den Drehzahlen der Räder 102, 104 oder basierend auf der Differenzdrehzahl ist die Vorrichtung 124 ausgebildet, um den Lenkwinkel 110 zu bestimmen. Die Vorrichtung 124 ist ferner ausgebildet, um ein den Lenkwinkel 110 repräsentierendes Signal auszugeben. Ferner ist die Vorrichtung 124 ausgebildet, um ein die Differenzdrehzahl repräsentierendes Signal auszugeben.

Gemäß einem Ausführungsbeispiel ist die Vorrichtung 124 ausgebildet, um zur Bestimmung des Lenkwinkels 110 sowie der Differenzdrehzahl neben der Drehrate um die Hochachse ferner eine Linearbeschleunigung des Fahrzeugs 100 zu verwenden. Bei der Linearbeschleunigung kann es sich um eine Längsbeschleunigung in Richtung der Längsachse 112 und zusätzlich oder alternativ um eine Querbeschleunigung quer zu der Längsachse 112 des Fahrzeugs 100, oder um einen sich aus der Längsbeschleunigung und der Querbeschleunigung ergebenden Beschleunigungsvektor handeln. Zur Bestimmung der Linearbeschleunigung kann das Fahrzeug 100 einen oder mehrere Beschleunigungssensoren umfassen. Gemäß diesem Ausführungsbeispiel weist der Sensor 120 neben dem Gierratensensor einen Beschleunigungssensor zum Erfassen der Längsbeschleunigung und der Querbeschleunigung des Fahrzeugs 100 auf. Der Sensor 120 ist ausgebildet, um ein die Längsbeschleunigung und ein die Querbeschleunigung repräsentierendes Signal an die Vorrichtung 124 auszugeben.

Gemäß einem Ausführungsbeispiel weist das Fahrzeug 100 eine Vorrichtung 126 zum Steuern eines Antriebsstrangs des Fahrzeugs 100 auf. Die Vorrichtung 126 ist ausgebildet, um die Drehrate des Fahrzeugs 100 um die Hochachse sowie die Differenzdrehzahl der Räder 102, 104 über eine Schnittstelle, hier von der Vorrichtung 124 zu empfangen und basierend darauf zumindest ein Steuersignal zum Steuern des Antriebsstrangs zu bestimmen und über eine Schnittstelle auszugeben. Gemäß diesem Ausführungsbeispiel ist der Antriebsstrang ausgebildet, um die Räder 102, 104 anzutreiben. Der Antriebsstrang weist eine Differenzialsperre 128 auf. Die Vorrichtung 126 ist ausgebildet, um das Steuersignal an die Differenzialsperre 128 auszugeben. Das Steuersignal ist geeignet, um die Differenzialsperre 128 zu schalten. Die Vorrichtung 126 kann ausgebildet sein, um anstelle der Differenzialsperre 128 oder zusätzlich zu der Differenzialsperre 128 weitere Einrichtungen oder Funktionen des Antriebsstrangs zu steuern.

Gemäß einem weiteren Ausführungsbeispiel weist das Fahrzeug 100 Drehzahlsensoren 130, 132 auf, die ausgebildet sind, um die Raddrehzahlen der Räder 102, 104 zu erfassen und an die Vorrichtung 124 auszugeben. Die Vorrichtung 124 ist ausgebildet, um basierend auf den Raddrehzahlen eine Raddrehzahldifferenz bezüglich der Raddrehzahlen der Räder 102, 104 sowie den Lenkwinkel 110 des Fahrzeugs 100 zu bestimmen. Die Vorrichtung 124 ist ferner ausgebildet, um basierend auf einem über die Drehrate bestimmten Wert für den Lenkwinkel 110 und basierend auf einem über die Drehzahlsensoren 130, 132 bestimmten Wert für den Lenkwinkel 110 einen möglichst exakten Wert für den tatsächlichen Lenkwinkel 110 des Fahrzeugs 100 zu bestimmen und an die Vorrichtung 126 auszugeben. Die Vorrichtung 124 ist ferner ausgebildet, um basierend auf einem über die Drehrate bestimmten Wert für die Drehzahldifferenz und basierend auf einem über die Drehzahlsensoren 130, 132 bestimmten Wert für die Raddrehzahldifferenz einen möglichst exakten Wert für die tatsächliche Drehzahldifferenz der Räder 102, 104 zu bestimmen und an die Vorrichtung 126 auszugeben. Alternativ kann die Vorrichtung 124 ausgebildet sein, um basierend auf dem möglichst exakten Wert für die tatsächliche Drehzahldifferenz der Räder 102, 104 den möglichst exakten Wert für den tatsächlichen Lenkwinkel 110 des Fahrzeugs 100 zu bestimmen.

Werden die Räder 106, 108 des Fahrzeugs 100 ebenfalls durch den Antriebsstrang oder einen weiteren Antriebsstrang des Fahrzeugs 100 angetrieben, so kann die Vorrichtung 124 in entsprechender Weise ausgebildet sein, um die Drehzahlen der Räder 106, 108 sowie eine Drehzahldifferenz der Drehzahlen der Räder 106, 108 zu bestimmen. Die Drehzahldifferenz der Räder 106, 108 kann in die Bestimmung des Lenkwinkels 110 einfließen. Ebenso können mittels entsprechender Sensoren die Raddrehzahlen der Räder 106, 108 direkt erfasst werden und zur Bestimmung einer Raddrehzahldifferenz der Räder 106, 108 sowie des Lenkwinkels 110 verwendet werden. Auch kann die Vorrichtung 126 ausgebildet sein, um eine oder mehrere Funktionen des weiteren Antriebsstrangs oder eines den Rädern 106, 108 zugeordneten Teil des Antriebsstrangs zu steuern.

Der Sensor 120 und die Vorrichtungen 124, 126 können in einem Gehäuse, beispielsweise eines Steuergeräts, integriert angeordnet sein. Auch können die Vorrichtungen 124, 126 zu einer Vorrichtung 134 zusammengefasst sein.

Fig. 2 zeigt eine schematische Darstellung eines Systems gemäß einem Ausführungsbeispiel der vorliegenden Erfindung. Das System kann beispielsweise in dem in Fig. 1 gezeigten Fahrzeug eingesetzt werden.

Das System umfasst einen Gierratensensor 120, Drehzahlsensoren 130, 132, eine Vorrichtung 134 und Sperren 128.

Der Gierratensensor 120 ist ausgebildet, um eine Information 241 über eine Beschleunigung des Fahrzeugs, eine Information 243 über eine Steigung oder einer Neigung des Fahrzeugs bzw. des Untergrunds des Fahrzeugs und eine Information 245 über eine Drehrate des Fahrzeugs zu ermitteln und an die Vorrichtung 134 auszugeben.

Die Drehzahlsensoren 130, 132 können den in Fig. 1 gezeigten Drehzahlsensoren entsprechen oder anderen Rädern oder zusätzlichen Rädern zugeordnete Drehzahlsensoren umfassen. Die Drehzahlsensoren 130, 132 sind ausgebildet, um Drehzahlen einzelner Räder des Fahrzeugs zu ermitteln und Informationen 247 über die Drehzahlen an die Vorrichtung 134 auszugeben.

Die Vorrichtung 134 umfasst gemäß diesem Ausführungsbeispiel ein Steuergerät für die ADM-Funktionalität des Fahrzeugs sowie Software für Schaltlogik, Sperren und Ansteuerung. Die Vorrichtung 134 ist ausgebildet, um die Informationen 241, 243, 245, 247 zu empfangen und basierend darauf zumindest eine Information 249 zum Schalten zu ermitteln und an die Sperren 128 auszugeben.

Die Sperren 128 können die in Fig. 1 gezeigte Differenzialsperre oder andere oder zusätzliche Sperren umfassen. Über die Sperren 128 kann eine Funktion des Antriebsstrangs des Fahrzeugs gesteuert werden. Die Sperren 128 sind ausgebildet, um ansprechend auf die Information 249 zum Schalten eine Sperrfunktion zu aktivieren oder aufzuheben.

Die Informationen 241, 243, 245, 247 können in Form von elektrischen Signalen an die Vorrichtung 134 bereitgestellt werden. Die Information 249 kann in Form eines oder mehrerer elektrischer Signale, beispielsweise eines Steuersignals, an die Sperren 128 bereitgestellt werden.

Das System ermöglicht eine Schaltung der Sperren 128 ohne das Vorhandensein eines Lenkwinkelsensors. Statt eines Lenkwinkelsensors erfolgt die Schaltung der Sperren 128 mithilfe eines Gierratensensors 120. Somit kann durch den Gierratensensor den 120 ein Lenkwinkelsensor ersetzt werden.

Somit kann anstelle eines Lenkwinkelsensors der Gierratensensor 120 von dem ADM-System zur automatischen Schaltung von Allrad und Differenzialsperren 128 verwendet werden, um bei angetriebenen Rädern eine eindeutige Schlupferkennung durchführen zu können. Eine solche Zuschaltlogik zum Schalten der Sperren 128 ist ganz wichtig, wenn sich das Fahrzeug in einer Kurvenfahrt befindet. Über den Gierratensensor 120 ist nun die Erkennung von Schlupf an Antriebsrädern des Fahrzeugs bei einer Kurvenfahrt möglich, ohne das dazu ein Lenkwinkelsensor verwendet wird.

Zur Schaltung der Sperren 128 ohne Lenkwinkelsensor können zwei mögliche Verfahren eingesetzt werden. Ein Verfahren basiert dabei auf dem Einsatz eines Gierratensensors 120. Das andere Verfahren basiert auf einer Lenkwinkelermittlung über die Differenzgeschwindigkeit an den Rädern. Die Differenzgeschwindigkeit kann basierend auf der Gierrate oder basierend auf direkt gemessenen Drehzahlen bestimmt werden. Die Verfahren können miteinander kombiniert werden.

Gemäß dem in Fig. 2 gezeigten Ausführungsbeispiel besteht der Gierratensensor 120 aus einem Drehratensensor in Form eines Gyrometers und einem Beschleunigungssensor. Der Gierratensensor 120 wird vorzugsweise als Ersatz für einen Lenkwinkelsensor verwendet. Der Sensor 120 kann dabei zwischen Kurvenfahrten und Schleuderbewegungen sowie zwischen Steigungen und Neigungen unterscheiden. Dazu kann der Sensor 120 ausgebildet, sein, um neben einer Drehung des Fahrzeugs um die Hochachse auch eine Kippbewegung des Fahrzeugs, beispielsweise eine Drehung um die Querachse, zu erfassen. Die Signale 241, 243, 245 des Gierraten-sensors 120 werden beispielsweise an ein ADM-Steuergerät der Vorrichtung 134 übermittelt und dort von der Software der Vorrichtung 134 eingelesen und bewertet.

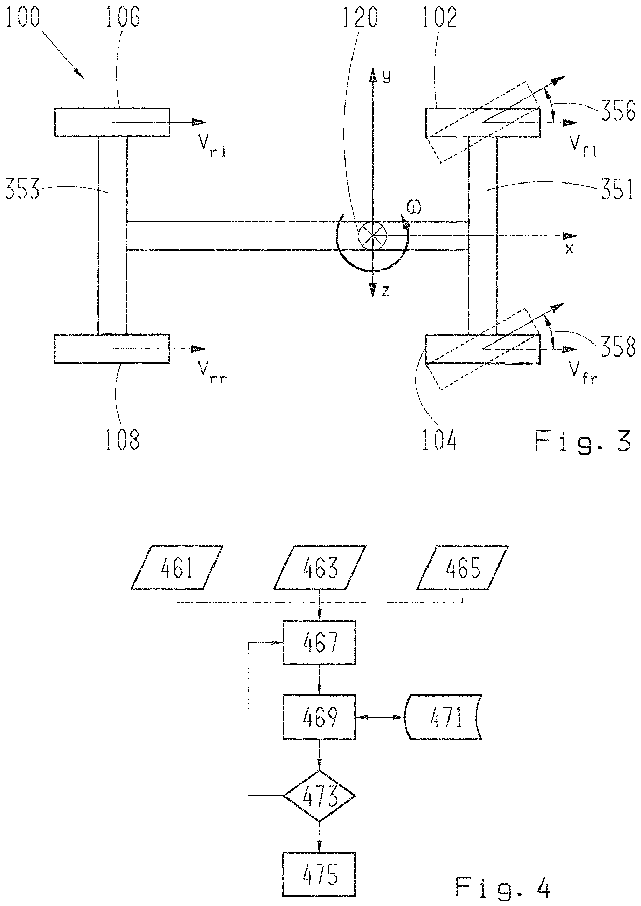

Fig. 3 zeigt eine schematische Darstellung eines Fahrzeugs 100 gemäß einem Ausführungsbeispiel der vorliegenden Erfindung. Dabei kann es sich um das bereits anhand von Fig. 1 beschriebene Fahrzeug handeln.

Das Fahrzeug 100 weist Räder 102, 104, 106, 108 auf. Die Räder 102, 104 sind über eine erste Achse 351 des Fahrzeugs 100 verbunden. Die Räder 106, 108 sind über eine zweite Achse 353 des Fahrzeugs 100 verbunden. Bei den Achsen 351, 353 kann es sich um Antriebsachsen handeln, sodass es sich bei den Rädern 102, 104, 106, 108 um Antriebsräder handeln kann. Bei dem Fahrzeug 100 kann es sich somit um ein Allradfahrzeug (4x4) handeln. Fährt das Fahrzeug, so weist das linke vordere Rad 102 eine Umdrehungsgeschwindigkeit Vfl auf. Das rechte vordere Rad 104 weist eine Umdrehungsgeschwindigkeit Vfr auf. Das linke hintere Rad 106 weist eine Umdrehungsgeschwindigkeit Vrl auf. Das rechte hintere Rad 108 weist eine Umdrehungsgeschwindigkeit Vrr auf.

Weist eines der vorderen Räder 102, 104 Schlupf auf, so können sich die Umdrehungsgeschwindigkeiten Vfl, Vfr voneinander unterscheiden. Dies kann durch das Zuschalten einer Sperre im Antriebsstrang der Räder 102, 104 verhindert werden. Weist eines der hinteren Räder 106, 108 Schlupf auf, so können sich die Umdrehungsgeschwindigkeiten Vrl, Vrr voneinander unterscheiden. Dies kann durch das Zuschalten einer Sperre im Antriebsstrang der Räder 106, 108 verhindert werden.

In Fig. 3 sind die vorderen Räder 102, 104 sowohl in einer Geradeausstellung als auch in einem eingeschlagenen Zustand gezeigt. Im eingeschlagenen Zustand weist das linke vordere Rad 102 einen Radlenkwinkel 356 und das rechte vordere Rad 104 einen Radlenkwinkel 358 auf. Nachdem die Räder 102, 104 bei einem Lenkwinkel des Fahrzeugs 100 unterschiedlich großen Radien folgen, können sich die Radlenkwinkel 356, 358 voneinander unterscheiden. Entsprechend können sich auch die Umdrehungsgeschwindigkeiten Vfl, Vfr voneinander unterscheiden, ohne das an einem der Räder 102, 104 Schlupf vorliegen würde. Ein Zusammenhang zwischen einem Lenkwinkel des Fahrzeugs 100, den Radlenkwinkeln 356, 358 und den Umdrehungsgeschwindigkeiten Vfl, Vfr kann bekannt sein und zur Bestimmung des Lenkwinkels verwendet werden.

Das Fahrzeug 100 weist einen Sensor 120 auf. Der Sensor 120 umfasst einen ω-Sensor, der ausgebildet ist, um eine Drehrate ω um eine Hochachse Z des Fahrzeugs 100 zu erfassen und bereitzustellen. Ferner umfasst der Sensor 120 einen Y-Sensor, der ausgebildet ist, um eine seitliche Beschleunigung entlang einer Querachse Y des Fahrzeugs 100 zu erfassen und bereitzustellen. Ferner umfasst der Sensor 120 einen X-Sensor, der ausgebildet ist, um Vorwärtsbewegungen und Rückwärtsbewegungen entlang einer Längsachse X des Fahrzeugs 100 zu erfassen und bereitzustellen. Ferner umfasst der Sensor 120 einen Z-Sensor, der ausgebildet ist, um eine Schrägstellung, beispielsweise eine Steigung oder Neigung des Fahrzeugs 100 zu erfassen.

Fig. 4 zeigt eine Ablauflogik eines Verfahrens zum Steuern zumindest einer Sperre eines Antriebsstrangs eines Fahrzeugs gemäß einem Ausführungsbeispiel der vorliegenden Erfindung. Dabei kann es sich um das in den Figuren 1 oder 3 gezeigte Fahrzeug handeln.

Ein Block 461 repräsentiert eine aktuelle Position, ein Block 463 repräsentiert eine Steigung oder Neigung und ein Block 465 eine Drehzahl der Räder des Fahrzeugs. Die aktuelle Position des Blocks 461 kann sich auf eine aktuelle Position des Fahrzeugs, auf einen aktuellen Lenkwinkel, auf aktuelle Radlenkwinkel, auf eine aktuelle Schaltstellung der mindestens einen Sperre oder auf einen aktuellen Fahrzustand des Fahrzeugs beziehen. Somit können aktuelle Werte oder aktuell vorhandene Werte zur Bestimmung zeitlich nachfolgender Werte eingesetzt werden.

Ein Block 467 repräsentiert einen Schritt des Erfassens der von den Blöcken 461, 463, 465 repräsentierten Daten, also einen Schritt des Erfassens einer aktuelle Position, einer Steigung oder Neigung und einer Drehzahl der Räder des Fahrzeugs.

Ein Block 469 repräsentiert einen Schritt des Auswertens, Berechnens und Vergleichens der in dem durch den Block 467 repräsentierten Schritt des Erfassens erfassten Daten. Dabei können von einem Block 471 repräsentierte Parameter verwendet werden. Auch können im Schritt des Auswertens, Berechnens und Vergleichens ermittelte Parameter in den Block 471 zur späteren Verwendung gespeichert werden.

Ein Block 473 repräsentiert einen Schritt des Entscheidens, ob die zumindest eine Sperre geschaltet wird oder nicht geschaltet wird. Der Schritt des Entscheidens wird abhängig von den im Schritt des Auswertens, Berechnens und Vergleichens bestimmten Daten durchgeführt. Wird im Schritt des Entscheidens entschieden, dass die zumindest eine Sperre nicht geschaltet wird, so wird in der Ablauflogik zu dem Block 467 zurückgesprungen und ein erneutes Erfassen der von den Blöcken 461, 463, 465 repräsentierten Daten durchgeführt. Wird im Schritt des Entscheidens entschieden, dass die zumindest eine Sperre geschaltet wird, so wird die zumindest eine Sperre geschaltet. Das Auslösen der zumindest einen Sperre oder das Auslösen der Sperren wird durch einen Block 475 repräsentiert.

In Fig. 4 ist eine Ablauflogik der grundsätzlichen Funktionalität gezeigt. Nach einer bestimmten hinterlegten Logik in der Software einer Vorrichtung, die die eingehenden Signale auswertet und vergleicht, sollen dann die entsprechenden Sperren ein- und ausgeschaltet bzw. weiter gehalten werden.

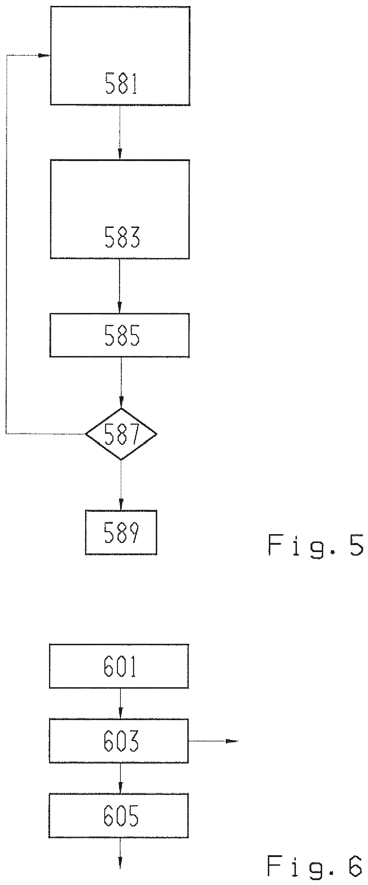

Fig. 5 zeigt in einer Ablauflogik einzelne Schritte der in Fig. 4 gezeigten Ablauflogik gemäß einem Ausführungsbeispiel der vorliegenden Erfindung. Die Ablauflogik bezieht sich dabei insbesondere auf die Schritte des Auswertens, Berechnens und Vergleichens.

In einem Schritt 581 wird ein Auswerten durchgeführt. Dabei werden eine aktuelle Position, eine Beschleunigung, eine Steigung oder Neigung sowie Raddrehzahlgeschwindigkeiten ausgewertet. Das Auswerten der genannten Daten kann gleichzeitig durchgeführt werden.

In einem Schritt 583 werden in einer Funktion eine Berechnung und ein Vergleichen der Auswertung aus dem Schritt 469 gegen hinterlegte Parameter durchgeführt. Dabei werden zum einen kinematische Bedingungen und zum anderen eine Differenzgeschwindigkeit an den Rädern berechnet und verglichen.

In einem Schritt 585 wird ein Bestimmen, ob Sperren ausgelöst werden dürfen, durchgeführt. Abhängig davon, ob in dem Schritt 585 bestimmt wird, dass die Sperren ausgelöst werden dürfen oder nicht ausgelöst werden dürfen, wird in einem Schritt 587 entschieden, ob ein Auslösen durchgeführt wird oder nicht durchgeführt wird. Wird in dem Schritt 587 entschieden, dass das Auslösen der Sperren nicht ausgeführt wird, so wird in der Ablauflogik zu dem Schritt 581 zurückgekehrt und das Auswerten wiederholt. Wird in dem Schritt 587 dagegen entschieden, dass das Auslösen der Sperren ausgeführt wird, so wird in einem Schritt 589 ein Auslösen der Sperren durchgeführt.

Anhand der vorangegangenen Figuren wird im Folgenden eine Lenkwinkelermittlung mit einem Gierratensensor 120 durch den Block 469 des Auswertens, Berechnens und Vergleichens gemäß einem Ausführungsbeispiel der vorliegenden Erfindung beschrieben.

Dabei werden zwei Verfahren für das Erkennen von Schlupf und damit für das Schalten der Sperren 128 miteinander verschmolzen. Wie in der in Fig. 3 gezeigten Kinematik des Gesamtsystems erkennbar, liefert der Gierratensensor 120 Informationen über die aktuelle seitliche Bewegung (Y- Position) und die Vorwärts- und Rückwärtsbewegung (X-Position) des Fahrzeugs 100. Genauer gesagt entspricht die Gierbewegung einer Drehbewegung um die fahrzeugfeste Hochachse und ist damit eng mit den Radgeschwindigkeiten Vfl, Vfr, Vrl, Vrr verknüpft. Über die in Fig. 3 gezeigten kinematischen Zusammenhänge lassen sich die Geschwindigkeiten Vfl, Vfr, Vrl, Vrr der Räder 102, 104, 106, 108 durch die Überlagerung der translatorischen und der rotatorischen Bewegung des Fahrzeugs 100 erhalten.

Des Weiteren sind in einem Fahrzeug 100 Sensoren 130, 132 angeordnet, die die aktuelle Drehzahl Vfl, Vfr, Vrl, Vrr der Räder zur Verfügung stellen. Diese aktuellen Drehzahlen, bzw. Differenzgeschwindigkeiten werden ausgewertet, differenziert und mit hinterlegten Kennlinien 471 verglichen. Daraus lässt sich der Lenkwinkel 110 ermitteln. Dieses Verfahren funktioniert insbesondere bei schnellen Änderungen der Differenzgeschwindigkeiten.

Beide Verfahren werden nun in einer Funktion 583 verschmolzen und miteinander und auch gegeneinander ausgewertet. Damit wird Folgendes erreicht:
Durch den Gierratensensor 120 lässt sich eine Auskunft über den realen Fahrzeugzustand erhalten. Dabei wird die Eigenschaft des Gierratensensors 120 für schnelle Änderungen ausgenutzt. Das Verfahren der Ermittlung des Lenkwinkels 110 über die Differenzgeschwindigkeiten liefert zum einen den Lenkwinkel 110, aber auch doch noch die Drehzahlen Vfl, Vfr, Vrl, Vrr an den Rädern 102, 104, 106, 108. Wird nun beides miteinander verschmolzen, so kann mit hoher Sicherheit das Zuschalten der Sperren in einer Kurvenfahrt bestimmt werden. Damit kann ein Lenkwinkelsensor bedenkenlos durch einen Gierratensensor ersetzt werden.

Weiter kann mit dem Gierratensensor 120 erkannt werden ob sich das Fahrzeug 100 in einer Steigungsposition oder einer Neigungsposition befindet. Damit werden weitere Bedingungen für das Schalten der Sperren 128 hinzugefügt.

Durch den Wegfall des Lenkwinkelsensors werden Kosten gespart, wenn der Sensor 120 bereits in dem Fahrzeug 100 eingesetzt wird und nun eine weitere Verwendung erhält. So können über den Sensor 120 in Zusammenarbeit mit der hinterlegten Software im Steuergerät 134 folgende Funktionen ersetzt und neue Funktionen hinzugefügt werden:
Bei einer Kurvenfahrt kann ohne Lenkwinkelsensor Schlupf an den Antriebsrädern 102, 104, 106, 108 erkannt werden. Über Steigungs- und Neigungs-Sensorik können neue Funktionalitäten für die Fahrt im Off - Road - Bereich zur Verfügung gestellt werden, beispielsweise auch zum Kalibrieren einer Steuervorrichtung einer Differenzialsperre. Durch die angebrachten Drehzahl-Sensoren 130, 132, die mit eingelesen werden und den Daten aus dem Gyrometer 120 kann die Logik für die Zuschaltung der Sperren 128 verbessert und verfeinert werden. Der Gierratensensor 120 kann in der Fahrerkabine des Fahrzeugs 100 eingebaut werden, da die Messung des Gierratensensors 120 für die Drehbewegungen, etc., unabhängig vom Ort im gesamten Fahrzeug 100 gleich ist.

Fig. 6 zeigt ein Ablaufdiagramm eines Verfahrens zum Bestimmen eines Lenkwinkels gemäß einem Ausführungsbeispiel der vorliegenden Erfindung. Gemäß diesem Ausführungsbeispiel wird der Lenkwinkel basierend auf einem Signal eines Gierratensensors bestimmt. Dabei kann es sich um den in den Figuren 1 oder 3 gezeigten Sensor 120 handeln.

In einem Schritt 601 werden basierend auf einer Drehrate des Fahrzeugs und gegebenenfalls ferner basierend auf zumindest einer Linearbeschleunigung Drehzahlen zumindest zweier gegenüberliegender Räder des Fahrzeugs bestimmt. In einem Schritt 603 wird basierend auf den Drehzahlen der zumindest zwei gegenüberliegenden Räder eine Differenzdrehzahl der zumindest zwei gegenüberliegenden Räder bestimmt. Die Differenzdrehzahl kann zum einen zur weiteren Auswertung, beispielsweise zur Ermittlung von Schlupf ausgeben und zum anderen in einem Schritt 605 zur Bestimmung des Lenkwinkels verwendet werden. Der Lenkwinkel kann zur weiteren Auswertung, beispielsweise zur Ermittlung von Schlupf zur Verfügung gestellt werden.

Somit kann gemäß einem Ausführungsbeispiel als eine erste Funktion ein Verfahren zur Bestimmung des Lenkwinkels über den Gierratensensor ausgeführt werden. Dabei erfolgt in dem Schritt 601 eine Berechnung der Geschwindigkeiten der Räder. In dem Schritt 603 erfolgt eine Bildung der Differenzgeschwindigkeiten. In dem Schritt 605 erfolgt ein Setzen der Differenzgeschwindigkeit in Beziehung zum Lenkwinkel, um den Lenkwinkel zu bestimmen.

Der Lenkwinkel und die Differenzgeschwindigkeit oder die Differenzgeschwindigkeiten können somit basierend auf einer Drehrate des Fahrzeugs selbst und gegebenenfalls zusätzlich basierend auf Beschleunigungen des Fahrzeugs selbst bestimmt werden.

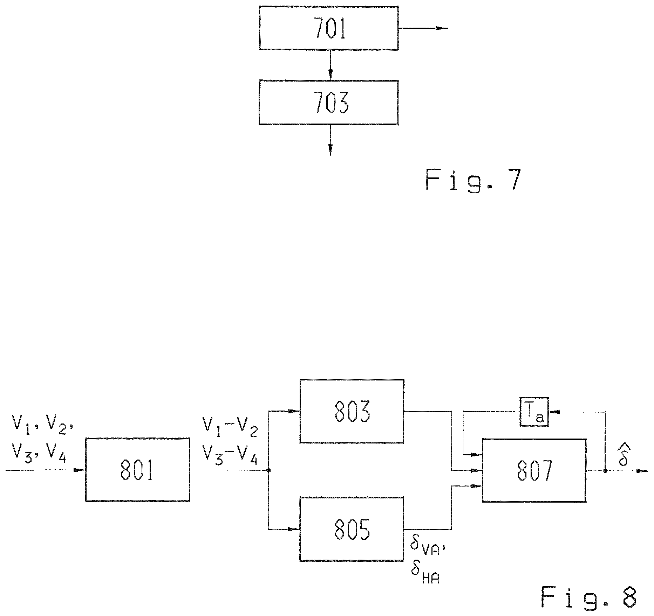

Fig. 7 zeigt ein Ablaufdiagramm eines Verfahrens zum Bestimmen eines Lenkwinkels gemäß einem weiteren Ausführungsbeispiel der vorliegenden Erfindung. Gemäß diesem Ausführungsbeispiel wird der Lenkwinkel basierend auf Signalen von Raddrehzahlsensoren bestimmt. Dabei kann es sich um die in Fig. 1 gezeigten Raddrehzahlsensoren 130, 132 handeln.

In einem Schritt 701 wird basierend auf Raddrehzahlen zumindest zweier gegenüberliegender Räder des Fahrzeugs eine Differenzdrehzahl der zumindest zwei gegenüberliegenden Räder bestimmt. Die Differenzdrehzahl kann zum einen zur weiteren Auswertung, beispielsweise zur Ermittlung von Schlupf zur Verfügung gestellt und zum anderen in einem Schritt 703 zur Bestimmung des Lenkwinkels verwendet werden. Der Lenkwinkel kann zur weiteren Auswertung, beispielsweise zur Ermittlung von Schlupf zur Verfügung gestellt werden.

Somit kann gemäß einem Ausführungsbeispiel als eine zweite Funktion ein Verfahren zur Bestimmung des Lenkwinkels über die Raddrehzahlsensoren ausgeführt werden. Dabei erfolgt in dem Schritt 701 eine Bestimmung der Differenzdrehzahlen der Räder. In dem Schritt 703 erfolgen ein Vergleich mit hinterlegten Kennlinien für Differenzgeschwindigkeiten, eine Bildung der Differenzgeschwindigkeiten und eine Ausführung einer hinterlegten Entscheidungslogik zur Bestimmung des Lenkwinkels. Die hinterlegte Entscheidungslogik kann sich auf einen vorangegangenen Schätzwinkel für den Lenkwinkel des Fahrzeugs, auf einen Lenkwinkel für die Vorderachse des Fahrzeugs und auf einen Lenkwinkel für die Hinterachse des Fahrzeugs sowie die Steigung oder Änderungsrate der Differenzgeschwindigkeiten beziehen.

Der Lenkwinkel und die Differenzgeschwindigkeit oder die Differenzgeschwindigkeiten können somit basierend auf Drehgeschwindigkeiten mehrerer oder aller Räder des Fahrzeugs bestimmt werden.

Fig. 8 zeigt entsprechend zu Fig. 7 ein Ablaufdiagramm eines weiteren Verfahrens zum Bestimmen eines Lenkwinkels basierend auf Signalen von Raddrehzahlsensoren gemäß einem Ausführungsbeispiel der vorliegenden Erfindung. Gezeigt ist ein Filter, beispielsweise gemäß diesem Ausführungsbeispiel ein Bessel-Filter dritter Ordnung 801, eine Einrichtung 803 zum Differenzieren, Einrichtung mit Kennlinien 805, eine Entscheidungslogik 807 und ein Verzögerungsglied Ta.

An einen Eingang des Bessel-Filters dritter Ordnung 801 werden Drehzahlen v₁, v₂, v₃, v₄ der Räder bereitgestellt. Der Bessel-Filter dritter Ordnung 801 ist ausgebildet, um basierend aus den Drehzahlen v₁, v₂, v₃, v₄ eine Differenzdrehzahl v₁-v₂ der Räder einer ersten Achse und eine Differenzdrehzahl v₃-v₄ der Räder einer zweiten Achse zu bestimmen und an die Einrichtung 803 zum Differenzieren und die Einrichtung mit Kennlinien 805 auszugeben. Die Einrichtung 803 zum Differenzieren ist ausgebildet, um die Differenzdrehzahlen v₁-v₂, v₃-v₄ zu differenzieren und Ableitungen der Differenzdrehzahlen v₁-v₂, v₃-v₄ an die Entscheidungslogik 807 auszugeben. Durch die Ableitungen der Differenzdrehzahlen v₁-v₂, v₃-v₄ werden Änderungen der Werte der Differenzdrehzahlen v₁-v₂, v₃-v₄ über die Zeit beschrieben. Die Einrichtung mit Kennlinien 805 ist ausgebildet, um eine Schätzung für einen Lenkwinkel δ_{VA} der ersten Achse und eine Schätzung für einen Lenkwinkel δ_{HA} der zweiten Achse zu bestimmen und an die Entscheidungslogik 807 auszugeben. Die Entscheidungslogik 807 ist ausgebildet, um den Lenkwinkel 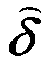 basierend auf dem Lenkwinkel δ_{VA} der ersten Achse, dem Lenkwinkel δ_{HA} der zweiten Achse, einen über das Verzögerungsglied Ta zurückgeführten vorangegangenen Lenkwinkel sowie den Ableitungen der Differenzdrehzahlen v₁-v₂, v₃-v₄ zu bestimmen.

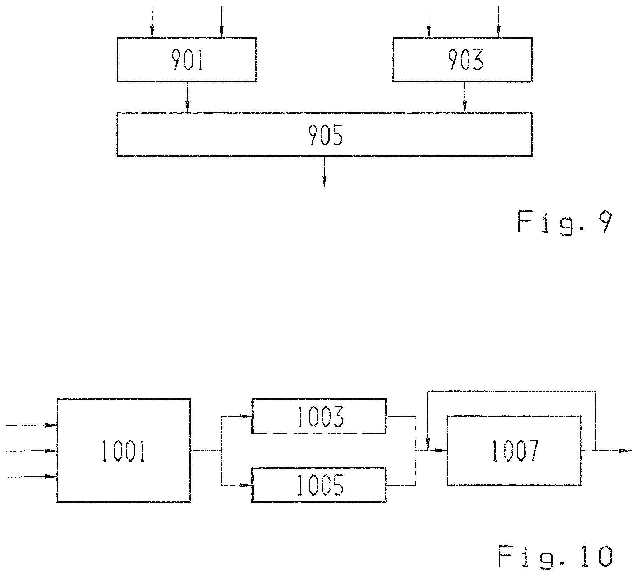

Fig. 9 zeigt ein Ablaufdiagramm eines Verfahrens zum Bestimmen eines Steuersignals gemäß einem Ausführungsbeispiel der vorliegenden Erfindung. Gezeigt ist eine erste Vergleichseinrichtung 901, eine zweite Vergleichseinrichtung 903 und eine Entscheidungslogik 905.

Die erste Vergleichseinrichtung 901 ist ausgebildet, um einen ersten Wert eines Lenkwinkels des Fahrzeugs und einen zweiten Wert eines Lenkwinkels des Fahrzeugs zu empfangen. Der erste Wert und der zweite Wert können parallel zueinander bestimmt worden sein. Dabei kann der erste Wert mittels des in Fig. 6 gezeigten Verfahren über die Gierrate des Fahrzeugs und der zweite Wert basierend auf den in den Figuren 7 und 8 gezeigten Verfahren über die Drehzahlen der Räder bestimmt worden sein. Die erste Vergleichseinrichtung 901 ist ausgebildet, um den ersten Wert und den zweiten Wert miteinander zu vergleichen und basierend auf dem Vergleich einen plausibilisierten Wert für den Lenkwinkel des Fahrzeugs zu bestimmen und auszugeben. Liegt eine Abweichung zwischen dem ersten Wert und dem zweiten Wert innerhalb vorgegebener Toleranzen, so ist die Vergleichseinrichtung 901 ausgebildet, um den plausibilisierten Wert basierend auf dem ersten und dem zweiten Wert zu bestimmen. Liegt eine Abweichung zwischen dem ersten Wert und dem zweiten Wert außerhalb vorgegebener Toleranzen, so ist die Vergleichseinrichtung 901 ausgebildet, um den ersten Wert mit vorgegebenen Toleranzen für den ersten Wert zu vergleichen und den zweiten Wert mit vorgegebenen Toleranzen für den zweiten Wert zu vergleichen. Ergibt der Vergleich, dass der erste Wert innerhalb der Toleranzen für den ersten Wert liegt, so ist die Vergleichseinrichtung 901 ausgebildet, um den plausibilisierten Wert basierend auf dem ersten Wert zu bestimmen. Ergibt der Vergleich, dass der zweite Wert innerhalb der Toleranzen für den zweiten Wert liegt, so ist die Vergleichseinrichtung 901 ausgebildet, um den plausibilisierten Wert für den Lenkwinkel basierend auf dem zweiten Wert zu bestimmen. Die jeweiligen Toleranzen oder entsprechende Wertebereiche oder Grenzwerte können vorbestimmt und in einem Speicher gespeichert sein. Die jeweiligen Toleranzen können auch mittels Kennlinien, Wertetabellen oder Berechnung fahrsituationsabhängig bestimmt werden.

Die zweite Vergleichseinrichtung 903 ist ausgebildet, um einen ersten Wert einer Differenzdrehzahl des Fahrzeugs und einen zweiten Wert einer Differenzdrehzahl des Fahrzeugs zu empfangen. Der erste Wert und der zweite Wert können parallel zueinander bestimmt worden sein. Dabei kann der erste Wert mittels des in Fig. 6 gezeigten Verfahren und der zweite Wert basierend auf den in den Figuren 7 und 8 gezeigten Verfahren bestimmt worden sein. Die zweite Vergleichseinrichtung 903 ist ausgebildet, um den ersten Wert und den zweiten Wert miteinander zu vergleichen und basierend auf dem Vergleich einen plausibilisierten Wert für die Differenzdrehzahl zu bestimmen und auszugeben. Liegt eine Abweichung zwischen dem ersten Wert und dem zweiten Wert innerhalb vorgegebener Toleranzen, so ist die zweite Vergleichseinrichtung 903 ausgebildet, um den plausibilisierten Wert basierend auf dem ersten und dem zweiten Wert zu bestimmen. Liegt eine Abweichung zwischen dem ersten Wert und dem zweiten Wert außerhalb vorgegebener Toleranzen, so ist die zweite Vergleichseinrichtung 903 ausgebildet, um den ersten Wert mit vorgegebenen Toleranzen für den ersten Wert zu vergleichen und den zweiten Wert mit vorgegebenen Toleranzen für den zweiten Wert zu vergleichen. Ergibt der Vergleich, dass der erste Wert innerhalb der Toleranzen für den ersten Wert liegt, so ist die zweite Vergleichseinrichtung 903 ausgebildet, um den plausibilisierten Wert basierend auf dem ersten Wert zu bestimmen. Ergibt der Vergleich, dass der zweite Wert innerhalb der Toleranzen für den zweiten Wert liegt, so ist die zweite Vergleichseinrichtung 903 ausgebildet, um den plausibilisierten Wert für die Differenzdrehzahl basierend auf dem zweiten Wert zu bestimmen. Liegen Differenzdrehzahlen für mehrere Achsen vor, so können mehrere Vergleiche durchgeführt werden, um mehrere plausibilisierte Differenzdrehzahlen zu bestimmen. Die jeweiligen Toleranzen oder entsprechende Wertebereiche oder Grenzwerte können vorbestimmt und in einem Speicher gespeichert sein. Die jeweiligen Toleranzen können auch mittels Kennlinien, Wertetabellen oder Berechnung fahrsituationsabhängig bestimmt werden.

Die Entscheidungslogik 905 ist ausgebildet, um basierend auf dem plausibilisierten Wert für den Lenkwinkel der ersten Vergleichseinrichtung 901 und dem plausibilisierten Wert für die Differenzdrehzahl der zweiten Vergleichseinrichtung 903 das Steuersignal, beispielsweise zum Schalten einer oder mehrerer Sperren eines Antriebsstrangs des Fahrzeugs zu bestimmen und auszugeben.

Somit kann gemäß einem Ausführungsbeispiel als eine dritte Funktion ein Verfahren zum Vergleichen der ermittelten Werte aus der oben genannten ersten Funktion und der oben genannten zweiten Funktion ausgeführt werden. Dabei wird in dem Schritt 903 überprüft, ob die ermittelten Differenzgeschwindigkeiten innerhalb vorgegebener Toleranzen liegen. In einem Schritt 901 wird überprüft, ob die ermittelten Lenkwinkel innerhalb vorgegebener Toleranzen liegen. Anschließend trifft eine Entscheidungslogik 905 eine Entscheidung "Ja" oder "Nein". Bei der dritten Funktion wird sowohl ein Wert für den Lenkwinkel als auch ein Wert für die Differenzdrehzahlen der Achsen W1 bis Wn des Fahrzeugs bestimmt.

In einer vierten Funktion wird ein Verfahren zum Ermitteln der Steigung oder Neigung durchgeführt. Dabei wird auf einen ermittelten Wert aus einem Sensor, beispielsweise dem in Fig. 1 gezeigten Drehratensensor, zurückgegriffen. In einem Schritt des Überprüfens wird überprüft, ob der von dem Sensor bereitgestellte Steigungs- oder Neigungswert innerhalb vorgegebener Toleranzen liegt. Abhängig davon wird von einer Entscheidungslogik eine Entscheidung "Ja" oder "Nein" getroffen. Bei der vierten Funktion wird ein Steigungs- und Neigungswert in Grad bestimmt.

Fig. 10 ein Ablaufdiagramm eines Verfahrens zum Steuern eines Antriebsstrangs eines Fahrzeugs gemäß einem Ausführungsbeispiel der vorliegenden Erfindung. Das Verfahren basiert auf einer fünften Funktion zum Auslösen der Sperren oder zumindest einer Sperre des Fahrzeugs.

Gezeigt ist eine Auswertefunktion 1001, eine Einrichtung 1003 mit Parametern, eine Einrichtung 1005 mit Kennlinien und eine Entscheidungslogik 1007.

Die Auswertefunktion 1001 ist ausgebildet, um einen Wert des Lenkwinkels, Werte der Differenzdrehzahlen und einen Steigungswert oder Neigungswert zu empfangen und auszuwerten. Die Auswertefunktion 1001 ist ausgebildet, um zumindest einen Auswertewert zu bestimmen und sowohl an die Einrichtung 1003 mit Parametern als auch an die Einrichtung 1005 mit Kennlinien bereitzustellen. Die Einrichtung 1003 mit Parametern ist ausgebildet, um den zumindest einen Auswertewert mit Parametern zu vergleichen und einen ersten Entscheidungswert an die Entscheidungslogik 1007 bereitzustellen. Die Einrichtung 1005 mit Kennlinien ist ausgebildet, um den zumindest einen Auswertewert mit Kennlinien zu vergleichen und einen zweiten Entscheidungswert an die Entscheidungslogik 1007 bereitzustellen. Die Kennlinien können vorbestimmt und gespeichert sein. Die Entscheidungslogik 1007 ist ausgebildet, um basierend auf dem ersten und dem zweiten Entscheidungswert sowie einem aktuellen Schaltzustand der Sperren die Sperren anzusteuern.

Die anhand der Figuren 6 bis 10 beschriebenen Funktionen können beispielsweise in dem in Fig. 4 gezeigten Block 469 ausgeführt werden und eine Berechnung und ein Vergleichen der Auswertung gegen die hinterlegten Parameter im Block 471 umsetzen.

Entsprechend dem beschriebenen Ansatz können eine oder mehrere weitere Funktionalitäten, beispielsweise eine Belastungserkennung oder eine Federwegerkennung implementiert werden.

### Bezugszeichen

- 100: Fahrzeug
- 102, 104: Vorderräder
- 106, 108: Hinterräder
- 110: Lenkwinkel
- 112: Längsachse
- 120: Sensor
- 124: Vorrichtung zum Bestimmen eines Fahrparameters
- 126: Vorrichtung zum Steuern eines Antriebsstrangs
- 128: Differenzialsperre
- 130, 132: Drehzahlsensoren
- 134: Vorrichtung
- 241: Beschleunigung
- 243: Steigung/Neigung
- 245: Drehrate
- 247: Drehzahlen
- 249: Schaltsignal
- 351: Vorderachse
- 353: Hinterachse
- 356: Radlenkwinkel
- 358: Radlenkwinkel
- 461: aktuelle Position
- 463: Steigung/ Neigung
- 465: Drehzahl
- 467: Schritt des Erfassens
- 469: Schritt des Auswertens, Berechnens und Vergleichens
- 471: Parameter
- 473: Schalten?
- 475: Sperren auslösen
- 551: Auswerten
- 583: Berechnen und Auswerten
- 585: Bestimmen, ob Sperren ausgelöst werden dürfen
- 587: Auslösen?
- 589: Sperren auslösen
- 601: erster Schritt
- 603: zweiter Schritt
- 605: dritter Schritt
- 701: erster Schritt
- 703: zweiter Schritt
- 801: Bessel-Filter
- 803: Differenzieren
- 805: Kennlinien
- 807: Entscheidungslogik
- 901: Vergleichseinrichtung
- 903: Vergleichseinrichtung
- 905: Entscheidungslogik
- 1001: Auswertefunktion
- 1003: Parameter
- 1005: Kennlinien
- 1007: Entscheidungslogik

## Patentansprüche

1. Verfahren zum Bestimmen eines möglichst exakten Wertes für den tatsächlichen Lenkwinkel (110) eines Fahrzeugs (100),
bei welchem ein erster Lenkwinkel (110) des Fahrzeugs (100) basierend auf einer Drehrate (245) des Fahrzeugs (100) bestimmt wird,
wobei diese Drehrate (245) mittels eines Dreh- oder Gierratensensors (120) des Fahrzeugs (100) bestimmt wird,
**dadurch gekennzeichnet,**
**dass** ein zweiter Lenkwinkel basierend auf Raddrehzahlen (247) zumindest zweier gegenüberliegender Räder (102, 104, 106, 108) des Fahrzeugs (100) bestimmt wird,
wobei diese Raddrehzahlen (247) für jedes dieser Räder (102, 104, 106, 108) mittels eines Raddrehzahlsensors (130, 132) bestimmt werden,
und **dass** der möglichst exakte Wert für den tatsächlichen Lenkwinkel (110) durch einen Vergleich oder eine Kombination der Werte des ersten und zweiten Lenkwinkels bestimmt wird.

2. Verfahren gemäß Anspruch 1, **dadurch gekennzeichnet, dass** der erste Lenkwinkel ferner basierend auf zumindest einer Linearbeschleunigung (241) bestimmt wird.

3. Verfahren gemäß einem der vorangegangenen Ansprüche, **dadurch gekennzeichnet, dass** basierend auf der Drehrate (245) Drehzahlen zumindest zweier gegenüberliegender Räder (102, 104, 106, 108) des Fahrzeugs (100) bestimmt werden, basierend auf den Drehzahlen zumindest eine Differenzdrehzahl bestimmt wird und basierend auf der Differenzdrehzahl der erste Lenkwinkel bestimmt wird.

4. Verfahren gemäß Anspruch 3, **dadurch gekennzeichnet, dass** basierend auf dem ersten Lenkwinkel und der Differenzdrehzahl ein Schlupf zumindest eines der zwei gegenüberliegenden Räder (102, 104, 106, 108) des Fahrzeugs (100) bestimmt wird.

5. Verfahren gemäß Anspruch 1, **dadurch gekennzeichnet, dass**
basierend auf der Drehrate (245) der erste Lenkwinkel und eine erste Differenzdrehzahl bestimmt werden und
basierend auf den Raddrehzahlen (247) der zumindest zwei gegenüberliegenden Räder (102, 104, 106, 108) der zweite Lenkwinkel und eine zweite Differenzdrehzahl bestimmt werden
und der möglichst exakte Wert für den tatsächlichen Lenkwinkel (110) des Fahrzeugs (100) unter Verwendung des ersten Lenkwinkels und des zweiten Lenkwinkels und einer Differenzdrehzahl des Fahrzeugs (100) basierend auf der ersten Differenzdrehzahl und der zweiten Differenzdrehzahl bestimmt wird.

6. Verfahren zum Steuern eines Antriebsstrangs eines Fahrzeugs (100), **dadurch gekennzeichnet, dass** ein möglichst exakter Wert für den tatsächlichen Lenkwinkel (110) des Fahrzeugs (100) gemäß einem der vorangegangenen Ansprüche bestimmt wird und basierend auf diesem Lenkwinkel (110) und einer Differenzdrehzahl des Fahrzeugs (100) ein Steuersignal (249) zum Steuern des Antriebsstrangs bestimmt wird.

7. Vorrichtung (124) zum Bestimmen eines Fahrparameters eines Fahrzeugs (100), **dadurch gekennzeichnet, dass** die Vorrichtung ausgebildet ist, um einen möglichst exakten Wert für den tatsächlichen Lenkwinkel (110) des Fahrzeugs (100)
basierend auf einer mittels eines Dreh- oder Gierratensensors (120) des Fahrzeugs bestimmten Drehrate (245) des Fahrzeugs (100) und
basierend auf jeweils mittels
eines Raddrehzahlsensors (130, 132) ermittelter Raddrehzahlen (247) zumindest zweier gegenüberliegender Räder (102, 104, 106, 108) des Fahrzeugs (100) zu bestimmen.

8. Vorrichtung (134) zum Steuern eines Antriebsstrangs eines Fahrzeugs (100), **dadurch gekennzeichnet, dass** eine Vorrichtung (124) gemäß Anspruch 7 und eine Einrichtung (126) zum Steuern vorgesehen ist, die ausgebildet ist, um basierend auf einem mit der Vorrichtung (124) gemäß Anspruch 7 bestimmten möglichst exakten Wertes für den tatsächlichen Lenkwinkel (110) des Fahrzeugs (100) und einer Differenzdrehzahl des Fahrzeugs (100) ein Steuersignal (249) zum Steuern des Antriebsstrangs zu bestimmen.

9. Computer-Programmprodukt mit Programmcode zur Durchführung des Verfahrens nach einem der Ansprüche 1 bis 6, wenn das Programm auf einer Vorrichtung ausgeführt wird.

## Claims

1. Method for determining a value which is precise as possible for the actual steering angle (110) of a vehicle (100),
in which a first steering angle (110) of the vehicle (100) is determined on the basis of a rotational rate (245) of the vehicle (100),
wherein this rotational rate (245) is determined by means of a rotational rate sensor or yaw rate sensor (120) of the vehicle (100), **characterized**
**in that** a second steering angle is determined on the basis of wheel rotational speeds (247) of at least two opposing wheels (102, 104, 106, 108) of the vehicle (100),
wherein these wheel rotational speeds (247) are determined for each of these wheels (102, 104, 106, 108) by means of a wheel rotational speed sensor (130, 132),
and **in that** the most precise possible value for the actual steering angle (110) is determined by comparison or combination of the values of the first and second steering angle.

2. Method according to Claim 1, **characterized in that** the first steering angle is also determined on the basis of at least one linear acceleration (241).

3. Method according to one of the preceding claims, **characterized in that** rotational speeds of at least two opposing wheels (102, 104, 106, 108) of the vehicle (100) are determined on the basis of the rotational rate (245), at least one differential rotational speed is determined on the basis of the rotational speeds, and the first steering angle is determined on the basis of the differential rotational speed.

4. Method according to Claim 3, **characterized in that** a slip of at least one of the two opposing wheels (102, 104, 106, 108) of the vehicle (100) is determined on the basis of the first steering angle and the differential rotational speed.

5. Method according to Claim 1, **characterized in that** the first steering angle and a first differential rotational speed are determined on the basis of the rotational rate (245), and
the second steering angle and a second differential rotational speed are determined on the basis of the wheel rotational speeds (247) of the at least two opposing wheels (102, 104, 106, 108),
and the most precise possible value for the actual steering angle (110) of the vehicle (100) is determined on the basis of the first differential rotational speed and the second differential rotational speed using the first steering angle and the second steering angle and a differential rotational speed of the vehicle (100).

6. Method for controlling a drive train of a vehicle (100), **characterized in that** a value for the actual steering angle (110) of the vehicle (100) which is as precise as possible is determined according to one of the preceding claims, and a control signal (249) for controlling the drive train is determined on the basis of this steering angle (110) and a differential rotational speed of the vehicle (100).

7. Device (124) for determining a driving parameter of a vehicle (100), **characterized in that** the device is designed to determine a value for the actual steering angle (110) of the vehicle (100) which is as precise as possible,
on the basis of a rotational rate (245) of the vehicle (100) which is determined by means of a rotational rate sensor or yaw rate sensor (120) of the vehicle, and
on the basis of wheel rotational speeds (247), which are respectively determined by means of a wheel rotational speed sensor (130, 132), of at least two opposing wheels (102, 104, 106, 108) of the vehicle (100).

8. Device (134) for controlling a drive train of a vehicle (100), **characterized in that** a device (124) according to Claim 7, and a control apparatus (126) is provided which is designed to determine, on the basis of a value for the actual steering angle (110) of the vehicle (100) which is as precise as possible and is determined with the device (124) according to Claim 7, and on the basis of a differential rotational speed of the vehicle (100), a control signal (249) for controlling the drive train.

9. Computer program product with program code for carrying out the method according to one of Claims 1 to 6 when the program is executed on a device.

## Revendications

1. Procédé de détermination d'une valeur aussi exacte que possible pour l'angle de direction réel (110) d'un véhicule (100),
dans lequel on détermine un premier angle de direction (110) du véhicule (100) en se basant sur une degré de giration (245) du véhicule (100),
dans lequel on détermine ce degré de giration (245) au moyen d'un capteur de degré de giration ou de lacet (120) du véhicule (100),
**caractérisé**
**en ce que** l'on détermine un deuxième angle de direction en se basant sur des vitesses de rotation de roue (247) d'au moins deux roues opposées (102, 104, 106, 108) du véhicule (100),
dans lequel on détermine ces vitesses de rotation de roue (247) pour chacune de ces roues (102, 104, 106, 108) au moyen d'un capteur de vitesse de rotation de roue (130, 132), et
**en ce que** l'on détermine la valeur aussi exacte que possible pour l'angle de direction réel (110) par une comparaison ou une combinaison du premier et du deuxième angles de direction.

2. Procédé selon la revendication 1, **caractérisé en ce que** l'on détermine le premier angle de direction en se basant en outre sur au moins une accélération linéaire (241).

3. Procédé selon l'une quelconque des revendications précédentes, **caractérisé en ce que** l'on détermine des vitesses de rotation d'au moins deux roues opposées (102, 104, 106, 108) du véhicule (100) en se basant sur le degré de giration (245), on détermine au moins une différence de vitesse de rotation en se basant sur les vitesses de rotation, et on détermine le premier angle de direction en se basant sur la différence de vitesse de rotation.

4. Procédé selon la revendication 3, **caractérisé en ce que** l'on détermine un patinage d'au moins une des deux roues opposées (102, 104, 106, 108) du véhicule (100) en se basant sur le premier angle de direction et la différence de vitesse de rotation.

5. Procédé selon la revendication 1, **caractérisé en ce que**
on détermine le premier angle de direction et une première différence de vitesse de rotation en se basant sur le degré de giration (245), et
on détermine le deuxième angle de direction et une deuxième différence de vitesse de rotation en se basant sur les vitesses de rotation de roue (247) desdites au moins deux roues opposées (102, 104, 106, 108), et
on détermine la valeur aussi exacte que possible pour l'angle de direction réel (110) du véhicule (100) en utilisant le premier angle de direction et le deuxième angle de direction et une différence de vitesse de rotation du véhicule (100) en se basant sur la première différence de vitesse de rotation et la deuxième différence de vitesse de rotation.

6. Procédé de commande d'une chaîne de transmission d'un véhicule (100), **caractérisé en ce que** l'on détermine une valeur aussi exacte que possible pour l'angle de direction réel (110) du véhicule (100) selon l'une quelconque des revendications précédentes et on détermine un signal de commande (249) pour commander la chaîne de transmission en se basant sur cet angle de direction (110) et sur une différence de vitesse de rotation du véhicule (100).

7. Dispositif (124) de détermination d'un paramètre de conduite d'un véhicule (100), **caractérisé en ce que** le dispositif est configuré pour déterminer une valeur aussi exacte que possible pour l'angle de direction réel (110) du véhicule (100)
en se basant sur un degré de giration (245) du véhicule (100) déterminé au moyen d'un capteur de degré de giration ou de lacet (120) du véhicule et
en se basant sur des vitesses de rotation de roue (247) d'au moins deux roues opposées (102, 104, 106, 108) du véhicule (100) déterminées respectivement au moyen d'un capteur de vitesse de rotation de roue (130, 132).

8. Dispositif (134) de commande d'une chaîne de transmission d'un véhicule (100), **caractérisé en ce qu'**il est prévu un dispositif (124) selon la revendication 7 et un dispositif de commande (126), qui est configuré pour déterminer un signal de commande (249) pour commander la chaîne de transmission en se basant sur une valeur aussi exacte que possible pour l'angle de direction réel (110) du véhicule (100) déterminée avec le dispositif (124) selon la revendication 7 et sur une différence de vitesse de rotation du véhicule (100).

9. Produit de programme informatique avec code de programme pour la mise en oeuvre du procédé selon l'une quelconque des revendications 1 à 6, lorsque le programme est exécuté sur le dispositif.
